# EUROPEAN PATENT SPECIFICATION

(11) **EP 0 442 212 B1**
(45) Date of publication and mention of the grant of the patent: **03.02.1999**
(21) Application number: 90313689.3
(22) Date of filing: 14.12.1990
(51) Int. Cl.: G11B 5/127, G11B 5/255, G11B 5/31, G11B 5/33

(54) **A method of manufacturing a thin film magnetic transducer**
Verfahren zur Erzeugung eines Magnetwandlers in Dünnfilmtechnik
Procédé pour la fabrication d'un transducteur magnétique à film mince

(30) Priority: 15.02.1990 US 480278
(43) Date of publication of application: 21.08.1991
(73) Proprietor: SEAGATE TECHNOLOGY INTERNATIONAL, Georgetown, Grand Cayman Island (KY)
(72) Inventor: Keel, Beat, Prior Lake, Minnesota 55372 (US); Calderon, Arthur, Minnetonka, Minnesota 55343 (US); Liao, Simon, Santa Barbara, California 93111 (US)
(74) Representative: Kenyon, Sarah Elizabeth

(56) References cited:
- EP-A- 0 185 289
- EP-A- 0 200 015
- EP-A- 0 311 855
- EP-A- 0 442 213
- "Nickel Teil B- Lieferung 2", Gmelins Handbuch der anorganischen Chemie, System-Nummer 57, 1996, Verlag Chemie GmbH- Weinheim/Bergstr., p.952
- "Lagerstoffe bis Milch", Ullmann Encyclopädie der technischen Chemie, 4. Auflage, Band 16, 1978, Verlag Chemie - Weinheim - New York, p.380-381

## Description

This invention relates to a method of manufacturing thin film magnetic transducers.

Thin film magnetic read/write heads are used for magnetically reading and writing information upon a magnetic storage medium such as a magnetic disk or magnetic tape. It is highly desirable to provide a high density of information storage on the magnetic storage medium.

Increased storage density in a recording system may be achieved by providing an areal density as high as possible for a given recording surface. In the case of rotating disk drives (both floppy and hard disks), the areal density is found by multiplying the number of flux reversals per unit length along the track (linear density in units of flux reversals per unit length e.g. inch) by the number of tracks available per unit length in the radial direction (track density in units of tracks per unit length e.g. inch).

As track densities have approached and exceeded 94.5 tracks per centimetre (2,400 tracks per inch), the alignment between upper and lower pole tips in thin film magnetic read/write heads has become critical. At such a high storage density, design criteria require magnetic transducers in which the bottom pole tip width is very nearly the same as the top pole tip width. Top and bottom poles should also be in close alignment.

A technique which provides better pole alignment begins with a top pole, bottom pole and a gap area separating the top and bottom poles, all fabricated substantially wider than desired. A narrower mask layer is then deposited upon the upper pole. The structure is then aligned using a material removal process ("milling") such as ion milling or reactive ion milling in which high energy ions bombard the pole tip region to remove the excess material (top pole, bottom pole and gap material) that extends beyond the edges of the masking layer. The masking layer protects only a portion of the top pole, bottom pole and gap so that the width of the completed pole tips is approximately the same as the width of the masking layer.

Examples of this technique are disclosed in United States Patent No. 4,791,719, EP-A-0 442 213, and European Patent Publication Number EP-A-0 383 739. This latter publication falls within the terms of Art 54(3) EPC.

The noted alignment technique is both slow and capital intensive. For example, assuming a top pole thickness of 4 microns, a bottom pole thickness of 3 microns and a gap thickness of 0.5 microns, and further assuming that gap layer material has a milling rate about one half the milling rate of pole tip layers, the total shaping time is about eight units of time. This is calculated with the formula: milling time = layer thickness x milling rate. For this example (4 x 1) + (3 x 1) + (0.5 x 2) = 8 units of time.

The present invention seeks to provide closely aligned pole tips in a thin film magnetic transducer allowing increased data storage densities.

According to one aspect of the present invention, there is provided a method of manufacturing a thin film magnetic transducer characterised by comprising: forming a first magnetic layer on a non-magnetic substrate; forming a gap material layer on the first magnetic layer; depositing a layer having an aperture of a defined structure upon the gap material layer; forming a second magnetic layer over the gap material layer and in the aperture; depositing a sacrificial mask layer on the second magnetic layer and in the aperture; removing the layer having an aperture, exposing a portion of the gap material layer and a portion of the first magnetic layer; and exposing the thin film magnetic transducer to a material removal process.

In one embodiment, the step of depositing the sacrificial mask layer comprises depositing first and second sacrificial mask layers, the first sacrificial mask layer being sandwiched between the second sacrificial mask layer and the second magnetic layer.

The step of exposing the thin film magnetic transducer to a material removal process may comprise ion milling, preferably reactive ion milling or sputter etching.

The first and/or second magnetic layer may have a thickness in the range of from about 1 micron to about 5 microns.

The gap material layer may have a thickness in the range from about 0.1 microns to about 1 micron.

The sacrificial mask layer may have a thickness in the range from about 1 micron to about 7 microns.

In our co-pending patent application EP 90 313 690 with the publication number EP 0 442 213 A2 there is disclosed and claimed the use of a particular profile for the mask and other layers in a thin film transducer to assist the material removal process, while in our copending application EP 90 313 691 having the publication number EP 0 442 214 A2 there is disclosed and claimed the use of two sacrificial masks and, in particular, materials used for masks in the formation of thin film transducers.

The invention is illustrated, merely by way of example, in the accompanying drawings, in which:-
Figure 1 shows a top view of a thin film magnetic transducer or read/write head according to the present invention prior to the step of milling excess gap material and a lower pole tip;
Figure 2 is a side cross sectional view of the transducer of Figure 1 taken along the line 2 - 2;
Figure 3 is a cross sectional view of the transducer of Figure 1 taken along the line 3 - 3 in Figure 1;
Figures 4A to 4H illustrate steps in forming a thin film magnetic transducer or read/write head according to the present invention;
Figure 5 is a cross sectional view of a pole tip region similar to Figure 4F in which bottom pole and gap material have "infinite width"; and
Figure 6 is a cross sectional view similar to Figure 4F of a pole tip region, a bottom pole having "infinite width" formed from substrate material.

The demand for increased storage density in magnetic storage media has led to reduced magnetic head dimensions. Magnetic heads are now fabricated in a manner similar to that used for semi-conductor integrated circuits in the electronics industry. Many thin film heads are deposited across a wafer or substrate using etching and photo-lithographic techniques. The wafer may then be sliced into many microscopic individual magnetic heads for use with magnetic storage devices such magnetic disks.

At these small dimensions, alignment between a pole tip of a head becomes critical, particularly as dimensions of the pole tip approach the tolerance and definition limits of the deposition techniques. Using a sacrificial masking technique of a method according to the present invention, problems associated with tolerance deficiencies are overcome. The present invention offers both time and cost savings over known alignment techniques.

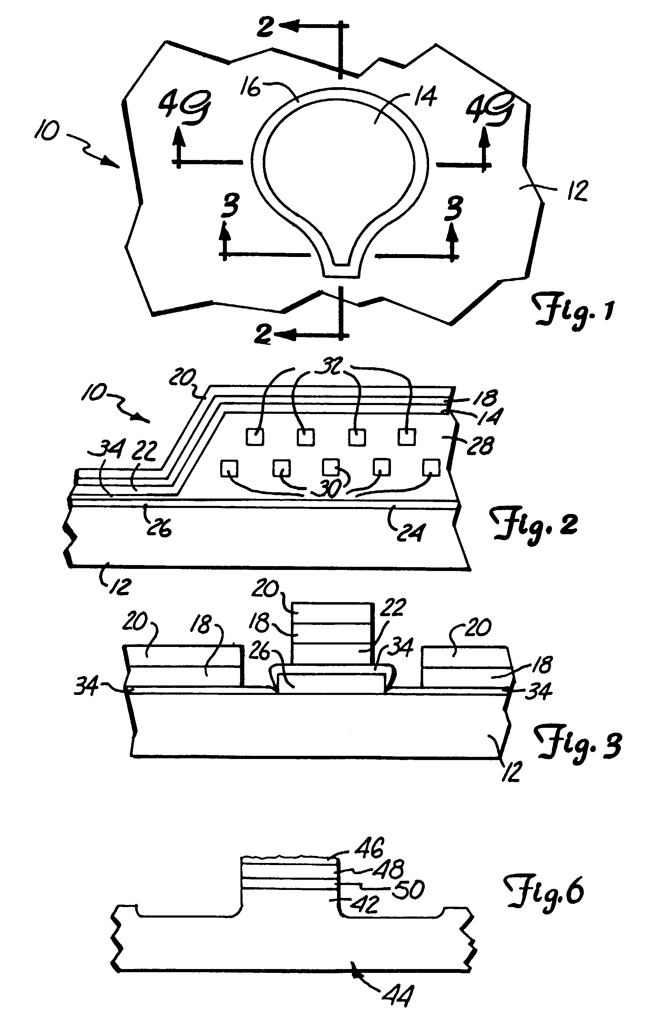

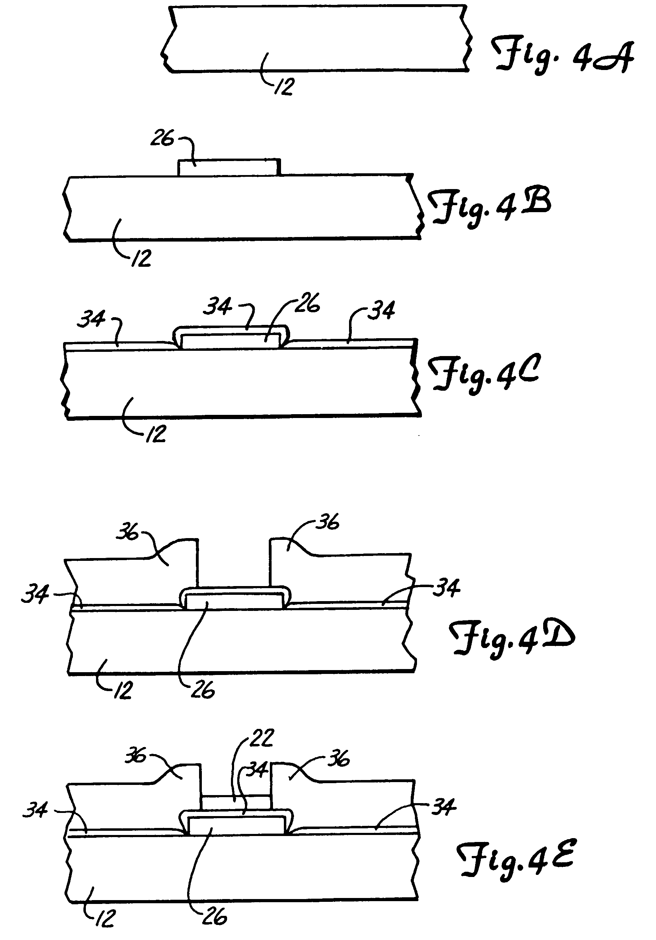

Figure 1 shows a top view of a thin film magnetic transducer or head 10 according to the present invention prior to removal of a sacrificial mask layer. Figure 1 includes a substrate 12, an upper pole piece 14 having a paddle shape and lower layers indicated collectively at 16. The substrate 12 typically comprises a ceramic compound such as Al₂O₃-TiC. The thin film magnetic head of Figure 1 is shown in cross section in Figure 2. The upper pole piece 14 is shown covered with two sacrificial mask layers 18, 20 in Figure 2. The upper pole piece 14 includes an upper pole tip 22. The thin film magnetic head 10 also includes a lower pole piece 24 having a lower pole tip 26. The upper and lower pole pieces 14, 24 are formed of magnetic thin films such as, for example, NiFe. The area between the upper pole piece 14 and the lower pole piece 24 is filled with an insulator 28. Embedded within the insulator 28 are conductors 30, 32. The area between the upper pole tip 22 and the lower pole tip 26 is filled with gap material 34, typically comprising Al₂O₃.

The upper pole piece 14 and the lower pole piece 24 contact each other at a back gap "via" (not shown) and form the two poles of a thin film magnetic transducer or head. The conductors 30, 32 are formed in a coil through the region between the upper pole piece 14 and the lower pole piece 24 and extend around the back gap via. As current is caused to flow through the conductors 30, 32, a magnetic field is induced in the upper and lower pole pieces 14, 24. This magnetic field extends between the upper and lower pole tips 22, 26 and through the gap material 34. Depending upon the design of the upper and lower pole tips 22, 26, a magnetic fringe field is formed extending beyond the boundaries of the upper and lower pole tips 22, 26. If a magnetic storage medium is passed through this fringe field, the magnetic flux emanating from the upper and lower pole tips 22, 26 will impress a magnetic field upon the surface of the magnetic storage medium. Conversely, if a magnetic field, such as that produced by a magnetic storage medium, is passed through the fringe field region of the thin film magnetic head 10, a magnetic field will be induced in the upper and lower pole pieces 14, 24 and through the back gap via. This changing magnetic field will induce an electric current to flow through the conductors 30, 32. The electric current is then sensed using electrical equipment and converted into an information signal to recover information stored upon the magnetic storage medium.

Figure 3 is a cross sectional view of a thin film magnetic head 10 showing the pole tip region of Figure 2. Sacrificial mask layers 18, 20 cover the upper pole tip 22 while leaving a portion of the gap material 34 and the lower pole tip 26 uncovered or exposed. The sacrificial mask layers 18, 20 may comprise nickel/iron (NiFe), copper or nickel/phosphorous (Nip). Such a sacrificial mask which is chemically distinct from the upper magnetic pole is claimed in our copending application EP 90 313 691 published as EP-A-0 442 214. As explained below, a milling process removes the exposed gap material 34 and the lower pole tip 26 along with the sacrificial mask layers 18, 20 to leave the upper pole tip 22 intact along with the protected portion of the gap material 34 and the lower pole tip 26. Typically the gap material 34 may range in thickness between about 0.1 microns and about 1 micron, the pole tips 22, 26 between about 1 micron and about 5 microns, and the total sacrificial mask thickness from about 1 micron to about 7 microns.

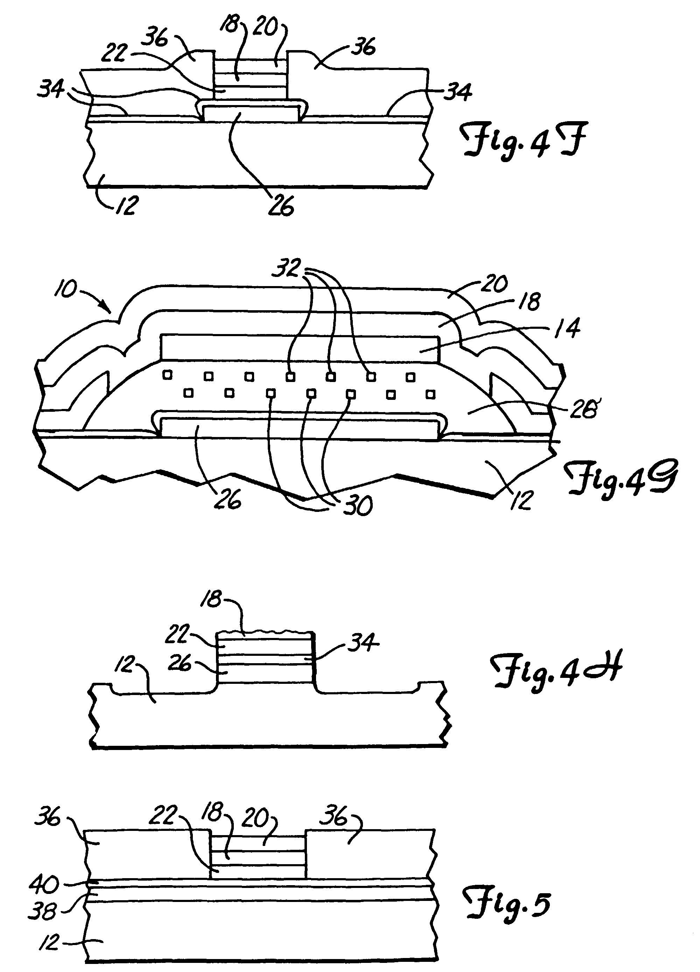

Figures 4A to 4H detail the steps of a method according to the present invention used to form the structure of Figure 3 having the sacrificial mask layers 18, 20 aligned with the upper pole tip 22.

Figure 4A is a cross sectional view of the substrate 12 upon which a deposition process takes place. The substrate 12 is generally very large relative to the thin film magnetic head 10 so that many replicas of the thin film magnetic head may be deposited across the entire surface of the substrate 12.

Figure 4B shows the substrate 12 of Figure 4A including the lower pole tip 26 deposited upon the substrate 12 using photo-lithographic techniques. The view of Figure 4B shows the width of the lower pole tip 26.

Figure 4C depicts the lower pole tip 26 including a layer of gap material 34 which also covers a portion of the substrate 12. The gap material 34 typically comprises Al₂O₃.

In Figure 4D two photo-resist dams 36 have been deposited upon the gap material 34 while leaving uncovered the area where the upper pole tip 22 will be deposited. Not shown in Figure 4D is that the photo-resist dams 36 do not cover the entire surface shown in Figures 1 and 2 and leave exposed the portion of the thin film magnetic head 10 where the upper pole piece 14 is to be desposited. The photo-resist dams 36 may be deposited using standard photo-lithographic and masking techniques. The upper pole piece 14 and the upper pole tip 22 are then deposited in the area between the photo-resist dams 36 upon the exposed portion of the gap material 34 as shown in Figure 4E. Figure 4F shows the pole tip region following deposition of the sacrificial mask layers 18, 20. Figure 4G depicts a cross section of Figure 1 taken in the middle portion of the thin film magnetic head 10 along the line 4G - 4G following the deposition of the sacrificial mask layers 18, 20. The sacrificial mask layer 20 may comprise any platable non-magnetic metal. The sacrificial mask layers may be chosen, for example, to the milling corresponding to the milling rates lower pole 26 and gap material 34, although other materials may be employed.

Figure 4G shows that the thin film magnetic head 10 is completely covered and protected by the sacrificial mask layers 18, 20 everywhere except the area near the pole tip region where the exposed portion of the gap material 34 and the exposed portion of the lower pole tip 26 are to be removed, as shown in Figure 3. The photo-resist dams 36 shown in Figure 4F are removed using a chemical etching process, which leaves the structure surrounding the pole tip area as shown in Figure 3.

The second sacrificial mask layer may also be used to protect the conductors during the milling process. The photo-resist dams 36 shown in Figure 4D to 4F actually extend around the entire paddle shape of the thin film magnetic head. Before the first sacrificial layer is deposited upon the upper pole tip, the portion of the photo-resist dams that is not near the pole tips is removed by exposure to radiation followed by chemical development. The relief area left by this photo-resist may then be covered over with the second sacrificial layer, to protect the conductors as shown in Figure 4G. Following milling, the second sacrificial layer may then be removed.

The pole tip region shown in Figure 3 (and consequently the thin film magnetic head 10) is then exposed to a material removal ("milling") process in which the unprotected areas of the thin film magnetic head 10 are milled away along with the sacrificial layers 18, 20. The milling process preferably comprising ion milling, in which argon or xenon ions are produced by an ion source and accelerated by an electric field through an electrified grid. Other ion sources may be used, as well as reactive ion milling in which the milling ions react with the milled material. Chemical etching or sputter etching may also be used for material removal. The energetic ions produced by the ion milling device bombard the surface of the thin film magnetic head 10 to remove a portion of the material they impact. This milling process removes the exposed areas of the gap material 34 and the lower pole tip 26 as well as the sacrificial layers 18, 20. The sacrificial layers 18, 20 must have a thickness and a milling rate so that the thin film magnetic head 10 and the upper pole tip 22 are protected during the milling process. In this example, the materials comprising the sacrificial masks 18, 20 are chosen to correspond to the lower pole tip 26 and the gap material 34.

Following the milling procedure, the resultant pole tip structure is shown in Figure 4H. The non-aligned portions of the gap material 34 and the lower pole tip 26 have been removed by the milling process. The milling process also removes all of the sacrificial layer 20 along with the majority of the sacrificial layer 18 when the thickness and milling rate of the sacrificial layers 18, 20 is optimised. If desired, the remaining portion of the sacrificial layer 18 may be removed through a process such as chemical etching.

The present invention may also be used when the lower pole tip and the gap material have "infinite width". In Figure 5, a cross section of a pole tip region having an infinite width, the lower pole tip 38 and the gap material 40 is shown. The upper pole tip 22, the sacrificial mask layers 18, 20 and the photo-resist dams 36 are deposited as described above. The photo-resist dams 36 are then chemically etched to leave the non-aligned portion of the lower pole tip 38 and the gap material 40 exposed and the aligned portion of the lower pole tip 38 and the gap material 40 covered by the upper pole tip 22 and the sacrificial layers 18, 20. A milling process is then applied as described above, and the non-aligned, exposed portions of the gap material 40 and the lower pole tip 38 are milled away while the upper pole tip 22, the aligned portions of the gap material 40 and the lower pole tip 38 are protected by the sacrificial layers 18, 20. The pole tip structure resulting from the milling process is similar to that shown in Figure 4H.

Figure 6 shows a pole tip structure comprising a lower pole tip 42 formed in a substrate 44 using a method according to the present invention. In Figure 6 the substrate 44 comprises magnetic ferrite. In a milling step, the lower pole tip 42 is formed in the substrate 44 because a sacrificial mask layer 46 protects an upper pole tip 48, a gap material layer 50 and a lower pole tip 42. The sacrificial mask layer 46 is formed using the self alignment techniques of a method according to the present invention.

The present invention produces thin film pole tips in vertical alignment which have similar widths. Even if the accuracy of the alignment between the upper and lower pole tips is poor due to the accuracy and definition of the deposition technique, the present invention provides a method to shape the pole tips and gap material so that these deficiencies are overcome. The present invention reduces time and provides cost savings in this shaping process. Because only two layers (the layer of the gap material and the layer of the pole tip) are milled, milling times are reduced along with mask thickness. Manufacturing time and cost are also reduced because only a single pair of photo-resist dams are used to form both the upper pole tip and the sacrificial mask.

It will be appreciated, for example, that different sacrificial mask materials and thicknesses may be used along with various milling and etching techniques.

## Claims

1. A method of manufacturing a thin film magnetic transducer (10) characterised by comprising: forming a first magnetic layer (26;42) on a non-magnetic substrate (12;44); forming a gap material layer (34;50) on the first magnetic layer (26; 42); depositing a layer (36) having an aperture of a defined structure upon the gap material layer (34;50); forming a second magnetic layer (22;48) over the gap material layer and in the aperture; depositing a sacrificial mask layer (18,20;46) on the second magnetic layer (22;48) and in the aperture; removing the layer (36) having an aperture, exposing a portion of the gap material layer (34;50) and a portion of the first magnetic layer (26;42); and exposing the thin film magnetic transducer (10) to a material removal process.

2. A method of manufacturing a thin film magnetic transducer (10) according to claim 1, characterised by:
forming the first magnetic layer (26;42) as a portion of a main body region and a portion of a pole tip region on the substrate (12,44); depositing the gap material layer (34;50) on the first magnetic layer in the pole tip region; and prior to depositing layer (36), depositing a non-magnetic insulator layer (28) on the first magnetic layer (26;42) in the main body region, the non-magnetic insulator layer carrying a plurality of electrical conductors (30,32) therethrough.

3. A method as claimed in any preceding claim characterised in that the step of depositing the sacrificial mask layer comprises depositing first and second sacrificial mask layers (18,20), the first sacrificial mask layer (18) being sandwiched between the second sacrificial mask layer (20) and the second magnetic layer (22).

4. A method as claimed in any preceding claim characterised in that the step of exposing the thin film magnetic transducer (10) to a material removal process comprises ion milling, preferably reactive ion milling or sputter etching.

5. A method as claimed in any of claims 2 to 4 characterised in that the first and/or second magnetic layer (26; 22; 42; 48) has a thickness in the range from about 1 micron to about 5 microns.

6. A method as claimed in any preceding claim characterised in that the gap material layer (34;50) has a thickness in the range from about 0.1 microns to about 1 micron.

7. A method as claimed in any preceding claim characterised in that the sacrificial mask layer (18,20;46) has a thickness in the range from about 1 micron to about 7 microns.

## Patentansprüche

1. Verfahren zur Herstellung eines Dünnfilm-Magnetwandlers (10),
gekennzeichnet durch die folgenden Schritte: Ausbilden einer ersten magnetischen Schicht (26;42) auf einem nichtmagnetischen Substrat (12;44) ; Ausbildung einer Spaltmaterialschicht (34;50) auf der ersten magnetischen Schicht (26;42); Abscheiden einer Schicht (36) mit einer Öffnung mit einer definierten Struktur auf der Spaltmaterialschicht (34;50); Ausbildung einer zweiten magnetischen Schicht (22;48) über der Spaltmaterialschicht und in der Öffnung; Abscheiden einer Opfermaskenschicht (18,20;46) auf der zweiten magnetischen Schicht (22;48) und in der Öffnung; Entfernen der eine Öffnung aufweisenden Schicht (36), Freilegen eines Teils der Spaltmaterialschicht (34;50) und eines Teils der ersten magnetischen Schicht (26;42) ; und Beaufschlagen des Dünnfilm-Magnetwandlers (10) mit einem Materialentfernungsprozess.

2. Verfahren zur Herstellung eines Dünnfilm-Magnetwandlers (10) nach Anspruch 1, gekennzeichnet durch:
die Ausbildung der ersten magnetischen Schicht (26;42) als Teil eines Hauptkörperbereiches und eines Teils eines Polspitzenbereichs auf dem Substrat (12,44); die Abscheidung der Spaltmaterialschicht (34;50) auf der ersten magnetischen Schicht in dem Polspitzenbereich; und die Abscheidung einer nichtmagnetischen Isolierschicht (28) auf der ersten magnetischen Schicht (26;42) in dem Hauptkörperbereich vor dem Abscheiden der Schicht (36), wobei die nichtmagnetische Isolierschicht eine Vielzahl von elektrischen Leitern (30,32) trägt, die sich durch diese erstrecken.

3. Verfahren nach einem der vorhergehenden Ansprüche,
dadurch gekennzeichnet, daß der Schritt der Abscheidung der Opfermaskenschicht die Abscheidung erster und zweiter Opfermaskenschichten (18,20) umfaßt, wobei die erste Opfermaskenschicht (18) zwischen der zweiten Opfermaskenschicht (20) und der zweiten Magnetschicht (22) eingeschichtet ist.

4. Verfahren nach einem der vorhergehenden Ansprüche,
dadurch gekennzeichnet, daß der Schritt der Beaufschlagung des Dünnfilm-Magnetwandlers (10) mit einem Materialentfernungsprozess das Ionenfräsen, vorzugsweise das reaktive Ionenfräsen, oder eine Zerstäubungsätzung umfaßt.

5. Verfahren nach einem der Ansprüche 2-4,
dadurch gekennzeichnet, daß die erste und/oder zweite magnetische Schicht (26;22;42;48) eine Dicke im Bereich von ungefähr 1 Mikrometer bis ungefähr 5 Mikrometer aufweist.

6. Verfahren nach einem der vorhergehenden Ansprüche,
dadurch gekennzeichnet, daß die Spaltmaterialschicht (34;50) eine Dicke im Bereich von ungefähr 0,1 Mikrometer bis ungefähr 1 Mikrometer hat.

7. Verfahren nach einem der vorhergehenden Ansprüche,
dadurch gekennzeichnet, daß die Opfermaskenschicht (18,20;46) eine Dicke im Bereich von ungefähr 1 Mikrometer bis ungefähr 7 Mikrometer hat.

## Revendications

1. Procédé de fabrication d'un transducteur magnétique à couche mince (10) caractérisé en ce qu'il comprend : la formation d'une première couche magnétique (26 ; 42) sur un substrat non magnétique (12 ; 44) ; la formation d'une couche de matière formant entrefer (34 ; 50) sur la première couche magnétique (26 ; 42) ; le dépôt d'une couche (36) ayant une ouverture d'une structure définie sur la couche de matière formant entrefer (34 ; 50) ; la formation d'une seconde couche magnétique (22 ; 48) au-dessus de la couche de matière formant entrefer et dans l'ouverture ; le dépôt d'une couche formant masque réactif (18, 20 ; 46) sur la seconde couche magnétique (22 ; 48) et dans l'ouverture ; l'enlèvement de la couche (36) ayant une ouverture, l'exposition d'une partie de la couche de matière formant entrefer (34 ; 50) et d'une partie de la première couche magnétique (26 ; 42) ; et l'exposition du transducteur magnétique à couche mince (10) à un processus d'enlèvement de matière.

2. Procédé de fabrication d'un transducteur magnétique à couche mince (10) selon la revendication 1, caractérisé par :
la formation de la première couche magnétique (26 ; 42) en tant que partie d'une zone de corps principal et d'une partie d'une zone d'extrémité de pôle sur le substrat (12, 44) ; le dépôt de la couche de matière formant entrefer (34 ; 50) sur la première couche magnétique dans la zone d'extrémité de pôle ; et avant le dépôt de la couche (36), le dépôt d'une couche isolante non magnétique (28) sur la première couche magnétique (26 ; 42) dans la zone de corps principal, la couche isolante non magnétique portant une pluralité de conducteurs électriques (30, 32) à travers cette dernière.

3. Procédé selon l'une quelconque des revendications précédentes, caractérisé en ce que l'étape de dépôt de la couche formant masque réactif comprend le dépôt de première et seconde couches formant masques réactifs (18, 20), la première couche formant masque réactif (18) étant prise en sandwich entre la seconde couche formant masque réactif (20) et la seconde couche magnétique (22).

4. Procédé selon l'une quelconque des revendications précédentes, caractérisé en ce que l'étape d'exposition du transducteur magnétique à couche mince (10) à un processus d'enlèvement de matière comprend un usinage par faisceau d'ions, de préférence un usinage par faisceau d'ions réactifs ou une attaque au plasma.

5. Procédé selon l'une quelconque des revendications 2 à 4, caractérisé en ce que la première et/ou la seconde couche magnétique (26 ; 22 ; 42 ; 48) a une épaisseur dans la plage d'environ 1 micron à environ 5 microns.

6. Procédé selon l'une quelconque des revendications précédentes, caractérisé en ce que la couche de matière formant entrefer (34 ; 50) a une épaisseur dans la plage d'environ 0,1 micron à environ 1 micron.

7. Procédé selon l'une quelconque des revendications précédentes, caractérisé en ce que la couche formant masque réactif (18, 20 ; 46) a une épaisseur dans la plage d'environ 1 micron à environ 7 microns.
